# EUROPEAN PATENT APPLICATION

(11) **EP 3 751 132 A1**
(43) Date of publication of application: **16.12.2020**
(21) Application number: 19179751.3
(22) Date of filing: 12.06.2019
(51) Int. Cl.: F03D 1/06, F03D 80/50

(54) **METHOD FOR EXCHANGING A PITCH BEARING OF A WIND TURBINE**

(71) Applicant: Jansen, Jan-Hendrik, 22949 Ammersbek (DE); Colino Llamas, Carlos, 48012 Bilbao (ES)
(72) Inventor: Collino Llamas, Carlos, 22849 Norderstedt (DE); Jansen, Jan-Hendrik, 22949 Ammersbek (DE)

(57) **Abstract**

Method of exchanging a pitch bearing at a wind turbine comprising the following steps:
- Erecting a temporary structural system next to the tower of the wind turbine,
- Turning a rotor blade with the pitch bearing to be exchanged into a vertical position with the rotor blade pointing downwards,
- Releasing the rotor blade from the pitch bearing to be exchanged,
- Moving the released rotor blade downwards at least until the upper end of a blade root of the rotor blade is below the upper end of the temporary structural system,
- Fixing the rotor blade to the temporary structural system,
- Exchanging the pitch bearing,
- Loosening the rotor blade from the temporary structural system and lifting the rotor blade to the exchanged pitch bearing,
- Connecting the rotor blade to the exchanged pitch bearing and
- Either exchanging a further pitch bearing or disassembling the temporary structural system.

## Description

The present invention pertains to a method of exchanging a pitch bearing of a wind turbine.

Like all complex technical machines wind turbines require maintainance and service over the time. Pitch bearings are usually designed for the whole life of the turbine if, however, damages occur the pitch bearings need to be exchanged to guarantee proper operation of the wind turbine. The exchange of a pitch bearing requires to dismount the rotor blade from the rotor hub and store the rotor blade in a suitable position during the exchange procedure.

From US 2010/0135797 A1 a method for exchanging the pitch bearing is known. According to the known method a portion of the blade member is supported through a blade member support structure operatively coupled to the wind turbine tower. The rotor blade is disconnected from the central hub and lowered relative to the tower member. For keeping the rotor blade at the tower a winching system is provided which lowers the rotor blade in parallel to the tower.

Japanese patent application JP 6-257555 A describes a wind turbine having a support structure for a rotor blade disconnected from the central hub. The support structure is mounted pivotable to the mast and comprises a hydraulic cylinder which allows to position the rotor blade relative to the central hub.

From US 2017/0114772 A1 a method for manufacturing wind turbine rotor blades for simplified installation and removal is known. According to the known method a plurality of root inserts for a blade root of the rotor blade is provided. One cylindric member is inserted to one of the root inserts such that the rotor blade can be lowered from a central hub using support cables. Several alternative methods for lowering the rotor blade from the central hub or moving the rotor blade to the central hub in its correct position are described within this prior art document.

Nevertheless, no matter which technique is used to lower the rotor blade from the central hub the question remains how a pitch bearing can be exchanged in an effective way without using technical equipment which is difficult to bring to the site of the wind turbine.

The technical problem to be solved by the invention is to provide a method for exchanging a pitch bearing of a wind turbine without using heavy equipment or other support such as heavy cranes to hold the rotor blade during exchange of the pitch bearing.

The problem is solved by the method according to the invention relying on the features of claim 1. Preferred embodiments of the invention are described in the subsequent dependent claims.

The method according to the invention refers to a situation in which the pitch bearing at the central hub is to be replaced while at the same time the rotor blade is handled without using heavy equipment such as heavy cranes and the like. The method according to the invention avoids to lower the rotor blade from hub height of the wind turbine. The rotor blade is supported by a temporary structural element next to the tower of the wind turbine. The method steps in detail are erecting a temporary structural system next to the tower of the wind turbine. Erecting the temporary structural system is done to support the rotor blade during the pitch bearing is exchanged. In a next step the rotor blade with the pitch bearing to be exchanged is turned into a vertical position with the rotor blade pointing downwards. In its six'o clock position the rotor blade is turned too. With the rotor blade in its position the rotor blade is at least partly released from the pitch bearing to be exchanged. In most configurations the inner ring of the pitch bearing is mounted to a blade root while the outer ring of the pitch bearing is mounted to the central hub. In the next step the at least partially released rotor blade is moved downwards until the upper end of the blade root of the rotor blade is below the upper end of the temporary structural system. As mentioned above in the prior art several different approaches for lowering the rotor blade from the central hub are known. For the method according to the invention it is necessary that the rotor blade is lowered with respect to the temporary structural system such that the lowered rotor blade can be supported at the temporary structural system. In the next step the rotor blade is fixed to the temporary structural system such that the rotor blade is no longer connected to the pitch bearing. Depending on the method used to lower the rotor blade from the pitch bearing, different approaches can be used to fix the rotor blade to the temporary structural system. When fixing the rotor blade to the temporary structural system of course further support mechanisms may be used to additionally support the rotor blade at the temporary structural system. With the rotor blade fixed to the temporary structural system the pitch bearing is exchanged. With the new pitch bearing in place the rotor blade is loosened from the temporary structural system and lifted back to the exchanged pitch bearing. Depending on the overall construction essentially the same mechanism for lowering the rotor blade can be used for lifting the rotor blade back into its position. Finally the rotor blade is connected to the exchanged pitch bearing. Depending on the overall situation either further pitch bearings are exchanged or the temporary strutural system is disassembled. An important aspect for the present invention is that the rotor blade during exchange of the pitch bearing is supported by the temporary structural system which is erected next to the wind turbine tower and which provides a sufficient support for the rotor blade. From a simple analysis it is quite evident that the temporary structural system has to hold the weight of the rotor blade and bending moments which are excerted to the rotor blade and therefore to the temporary structural system. The present invention relies on the insight that a temporary structural system such as a crane tower or a soaring tower are sufficient to hold a rotor blade next to the tower.

In a preferred embodiment of the method erecting the temporary structural system comprises a step of erecting a temporary scaffold to support the dismounted rotor blade. The temporary scaffold is connected in one or more sections to the tower of the wind turbine. It is possible to use the temporary scaffold as well known in the prior art at construction sites to perform work at great height. The advantage of using a temporary scaffold is that it is highly modular and can therefore be transported without considerable effort. Even in highly inaccessable areas it is possible to use and to erect a temporary scaffold rather than a crane which is suitable to hold a rotor blade in position during exchange of the pitch bearing. In order to keep up with bending moments and tilting of the temporary structural system it is preferred to connect the temporary scaffold in one or more sections to the tower of the wind turbine.

In a further embodiment the step of moving the rotor blade downwards uses a descent unit. The descent unit may have any structure suitable to lower the rotor blade. Of course, the descent unit should allow to exchange the pitch bearing. This means that a winching system is preferable suitable as a descent unit if the support cable does not run through the inner ring of the pitch bearing, if the support cable runs through the pitch bearing it is necessary to remove the cable after the rotor was fixed to the support structure and before the pitch bearing can be exchanged.

Preferably a hydraulic cylinder is used to support the rotor blade. The hydraulic cylinder acts between the rotor blade and the tower and/or the temporary structural system. The hydraulic cylinder allows to control the inclination of the rotor blade.

For most wind turbines the rotor blade is mounted to the central hub having an inclination of 2° to 12° with respect to the longitudinal axis of the tower. This hydraulic cylinder allows an easier release of the bolted connection between the blade and the pitch bearing as it can compensate bending moments on the connection due to the blade weight. Using the hydraulic cylinder to compensate the bending moments is preferable used during fixing and releasing the rotor blade to the hub. By avoiding bending moments between the rotor blade and the pitch bearing releasing and fastening of bolts and/or studs for the rotor blade is made easier. This support attached to the tower and/or the temporay structural system is located close to the rotor blade tip in the area where usually the section of the rotor blade is reinforced to use this section for handling purposes.

When lowering the rotor blade using the descent unit, If the rotor blade is going to be moved down a short distance and the inclination of the rotor blade is going to be kept, then the hydraulic cylinder supporting the rotor blade close to the rotor blade tip can be used, providing a system to allow the blade slide on the support.

If the rotor blade is going to be lowered a long distance or it is going to be kept on a vertical position, then the hydraulic cylinder is used to firstly move the rotor blade to an almost vertical position where there is no bending moment due to the rotor blade weigth and then the rotor blade can be lowered. Depending on the distance that the rotor blade is being lowered, it can be necessary to use a second hydraulic cylinder on the handling position, at an approximately the same distance that the distance moved down by the rotor blade. This is needed if the new contact section of the rotor blade with the support on the lowered position is not prepared to resist the forces transmited to the support, that it will likely happened if the rotor blade is lowered a significant distance.

Both, the descent unit and the hydraulic cylinder are used in a coordinated way to lower the rotor blade from the central hub.

In a preferred embodiment first an initial distance for the rotor blade to the pitch bearing is achieved by releasing some or all studs connecting the rotor blade to the pitch bearing. In a preferred form the studs fixing the rotor blade to the pitch bearing and in particular to the inner ring of the pitch bearing are replaced by longer studs to achieve the initial distance of the rotor blade to the pitch bearing. If the initial distance of the rotor blade to the pitch bearing is reached it is possible to use a different technique to further lower the rotor blade.

When using the elongated studs to achieve the initial distance of the rotor blade to the pitch bearing it is also possible to use hydraulic descent cylinders acting between the pitch bearing and the rotor blade. Any descent unit allowing a controlled descent of the rotor blade from the pitch bearing is suitable to be used with the method according to the invention.

In a preferred embodiment the descent unit comprises at least one support bar which is connected to the rotor blade after some of the studs have been released and the initial distance is achieved. With using the support bar the weight of the rotor blade is transferred from the pitch bearing to the support bar. Preferrably the support bar comprises a support frame having a connecting part connected to the rotor blade and an elongated support arm allowing to fix the support frame with the rotor blade to the temporary structural system. Therefore, there is at least one support frame which supports the rotor blade at the temporary structural system. The support frame comprises a connecting part connected to the rotor blade and support arm fixed to the temporary structural system. The support frame may be formed as one part or provided in a two-part form which allows to connect the connecting part to the rotor blade independently of the support arm to be fixed to the temporary structural system. The two-part form provides more flexibility in handling, when the rotor blade is secured to the temporary structural system.

In a preferred method the support frame is fixed to bores of the released studs in the blade root of the rotor blade. This method step allows clear control over the connection and the support of the rotor blade.

In a preferred embodiment the nacelle (rotor hub) is yawed to a new position in which the affected pitch bearing can be freely descended without any interference with the temporary structural system. In order to freely descent the affected pitch bearing it is preferred that the temporary structural system does not completely surround the tower of the wind turbine.

In a preferred embodiment a blade support unit is mounted to the temporary structural system. The blade support unit supports the rotor blade at a distance to the temporary structural system and to the tower of the wind turbine such that the inclination of the rotor blade remains the same for the rotor blade mounted to the rotor hub and for the rotor blade being fixed to the temporary structural system. According to the approach the inclination remains constant and it is not necessary to adjust the inclination when remounting the rotor blade to the rotor hub.

A preferred embodiment of the present invention is described in the following:
- Fig. 1: shows a wind turbine with an erected temporary structural system for exchanging the rotor blade,
- Fig. 2: shows the wind turbine of Fig. 1 with the rotor blade fixed to the temporary structural system,
- Fig. 3: shows the inclination of the rotor blade and
- Fig. 4: shows a top view to a frame support fixed to the temporary structural system and holding the rotor blade.

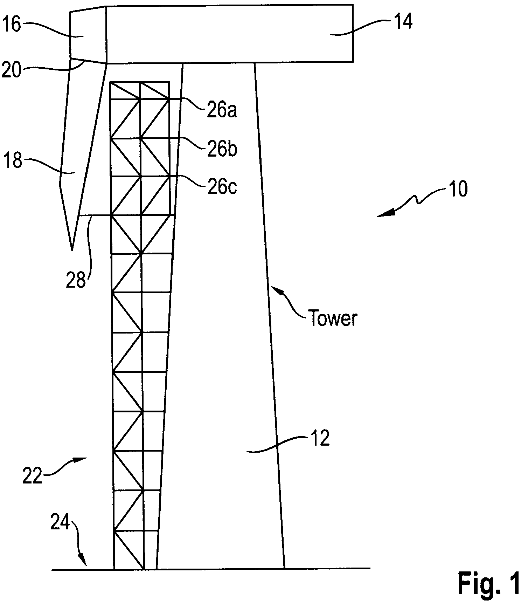

Fig. 1 shows an on-shore wind turbine 10 having a tower 12 to which a nacelle 14 is mounted. The nacelle 14 can be turned about the longitudinal axis of the tower 12 in order to follow the wind direction. This process of turning the nacelle 14 is called yawing. The side of the nacelle 14 facing the wind bears a central hub 16. The central hub 16 is sometimes also called rotor hub where the word "rotor" refers to the rotation of the hub and not to a rotor provided within the generator. The central hub 16 bears a rotor blade 18 which has been turned into a six'o-clock-position.

To provide a better survey Fig. 1 shows only one rotor blade 18. The rotor blade 18 is mounted to the central hub 16 via a pitch bearing 20. Usually an electric or hydraulic power unit is provided with the pitch bearing in order to turn the rotor blade around its longitudinal axis. Due to turning the rotor blade the angle of attack for the wind changes and therefore the power is taken from the wind.

Fig. 1 additionally shows a temporary scaffold 22 erected next to the tower 12 of the wind turbine. The temporary scaffold 22 stands on the ground 24. It may be erected on the ground next to the wind turbine or partly or completely on a foundation for the tower. For the temporary structrual system which is provided in Fig. 1 as a temporary scaffold 22 but different systems are possible. The essential idea is that the temporary structural system is comprised of a plurality of elements which can be connected easily to erect the temporary structural system. Besides, a temporary scaffold as used at constructions sites, for example to work at a building, other temporary structural systems may be used. In particular, crane towers use modular structural elements which also may be used as temporary structural system for the invention.

The temporary structural system as shown in Fig. 1 is essentially self-supporting and capable to bear the weight of a rotor blade. The temporary structural system 22 is attached in some connection points 26a, 26b, 26c to the tower 12. The connection points 26a - c do not necessarily define a connection point or fixing means within the sheath of the tower. The connection points 26a - c may also be provided as belts or other means running around the tower 12.

As shown in Fig. 1, the temporary structural system 22 is constructed such that it can be erected completely between the rotor blade 18 and the tower 12. This provides the opportunity to broaden the temporary structural system with increasing height just as the diameter of the tower decreases with increasing heigt.

Fig. 1 additionally shows a hydraulic cylinder 28 acting between a tip of the rotor blade 18 and the temporary structural system 22. The hydraulic cylinder 28 has several functions. It inter alia supports the rotor blade in its position during mounting and dismounting the rotor blade from the pitch bearing 20. Furthermore, the hydraulic cylinder 28 supports the position of the rotor blade 18 during descent of the rotor blade. When the rotor blade 18 is mounted to the structural system 22 the hydraulic cylinder 28 supports the rotor blade and avoids a tilting moment for the structural system.

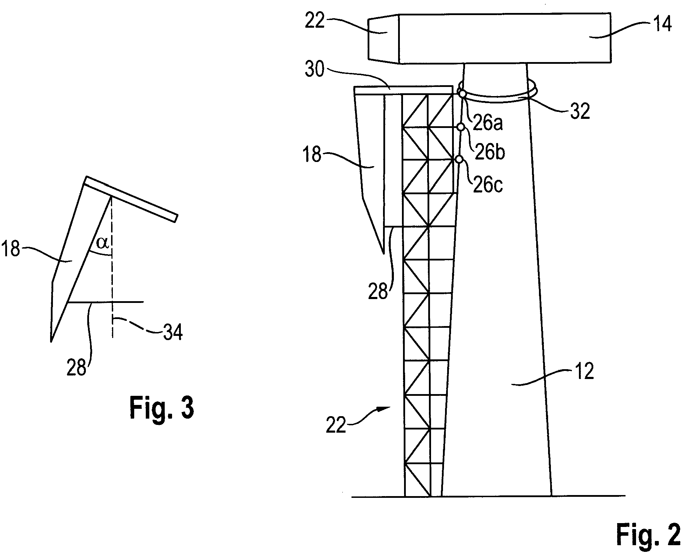

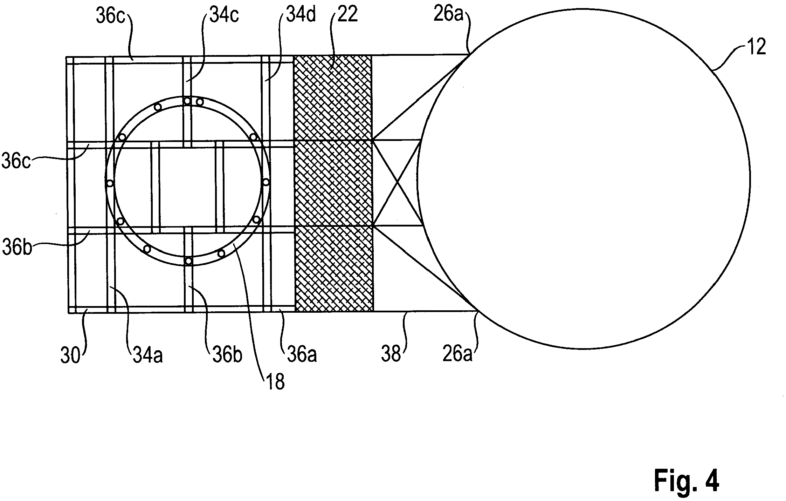

Fig. 2 shows the rotor blade 18 disconnected from the central hub 16 and fixed at the temporary structural system 22. The rotor blade 18 is mounted to a support frame 30 (cp. Fig. 4) which is fixed at a top of the temporary structural system 22. Additional to the connection points 26a - c a belt 32 is provided which additionall to the connection point 26a fixes the temporary structural system 22 to the tower 12.

Fig. 3 shows a schematic view of the rotor blade 18 in its inclined position. The rotor blade 18 shows an angle of inclination to the vertical dashed line 34. Using the hydraulic cylinder 28 allows to change the angle of inclination α by lengthening or shortening the hydraulic cylinder 28.

Fig. 4 shows the rotor blade 18 in a vertical position mounted to the temporary structural system while Fig. 1 still shows the rotor blade 18 in its inclined position. The position of the rotor blade 18 mounted to the temporary structural system 22 may of course vary. Depending on the length of the rotor blade and other factors such as the descent unit for the rotor blade it may be preferable to support the rotor blade 18 in its inclined position. A hydraulic cylinder 28 attached to the tip of the rotor blade allows to change the angle of inclination in a controlled manner.

Fig. 4 shows a schematically top view to the tower 12 and the rotor blade 18 mounted to a support frame 30. The support frame 30 comprises an essentially rectangular connecting frame 34 having connecting parts 36 connected to the bores of the rotor blade. The connecting parts 36a - d are connected to the bores of the rotor blade e.g. using the same studs as used to connect the rotor blade to the pitch bearing. The connecting frame 34 is comprised of support arms 34a - d which run in parallel and are fixed at the temporary structural system 22. The temporary structural system 22 is connected by ties 38 to the connection points 26a - c. The configuration of connecting parts 36a - d and support arms 34a - d allows to assemble the support frame 30 to the rotor blade 18 even if the rotor blade 18 is still held at the pitch bearing by some of the studs.

The support frame 30 connects the temporary structural system 22, e.g. the temporary scaffold to the rotor blade 18. It is formed of several profiles which are connected as support arms 34a - d and connecting parts 36a - d joined together. Preferably each profile weights less than 25 kg. There is enough space between the profiles so the connection between the rotor blade and the hub can go through the support frame. The support frame is assembled in situ after the blade has been lowered to the position where it is going to hang while exchanging the pitch bearing. It is possible to assemble the support frame without using heavy handling tools or an auxiliary crane. The rotor blade can be fixed by bolted connections to the support frame on some of the free bore holes not used to connect the rotor blade to the hub or the pitch bearing, respectively. This leads to a connection that can bear the acting moments. The support frame can hold the rotor blade in a vertical position or it can keep the angle of inclination of the rotor blade when it is installed to the hub.

### List of numerals

- 10: Wind turbine
- 12: Tower
- 14: Nacelle
- 16: Central hub
- 18: Rotor blade
- 20: Pitch bearing
- 22: Temporary Scaffold / Structural system
- 24: Ground
- 26a-c: Connection points
- 28: Hydraulic cylinder
- 30: Support frame
- 32: Belt
- 34: Connecting frame
- 34a-d: Support arms
- 36a-d: Connecting parts
- 38: Ties

## Claims

1. Method of exchanging a pitch bearing (20) of a wind turbine (10) comprising the following steps:
- Erecting a temporary structural system (22) next to the tower (12) of the wind turbine (10),
- Turning a rotor blade (18) with the pitch bearing (20) to be exchanged into a vertical position with the rotor blade (18) pointing downwards,
- Releasing the rotor blade (18) from the pitch bearing (20) to be exchanged,
- Moving the released rotor blade (18) downwards at least until the upper end of a blade root of the rotor blade (18) is below the upper end of the temporary structural system (22),
- Fixing the rotor blade (18) to the temporary structural system (22),
- Exchanging the pitch bearing (20),
- Loosening the rotor blade (18) from the temporary structural system (22) and lifting the rotor blade (18) to the exchanged pitch bearing (20),
- Connecting the rotor blade (18) to the exchanged pitch bearing (20) and
- Either exchanging a further pitch bearing (20) or disassembling the temporary structural system (22).

2. Method according to claim 1, **characterized in that** erecting the temporary structural system (22) comprises the steps of erecting a temporary scaffold to support the dismounted rotor blade (18), wherein the temporary scaffold is connected in one or more sections to the tower (12) of the wind turbine (10).

3. Method of claim 1 or 2, wherein the steps of releasing the rotor blade (18) from the pitch bearing (20) and/or connecting the rotor blade to the exchanged pitch bearing comprises use of at least one pneumatic or hydraulic cylinder (28) which acts between the rotor blade (18) and the tower (12) and/or the temporary structural system.

4. Method of one of the claims 1 to 3, wherein the step of fixing the rotor blade to the the temporary structural system (22) includes the use of the at least one pneumatic or hydraulic cylinder (28) which acts between the rotor blade (18) and the tower (12) and/or the temporary structural system.

5. Method of one of the claims 1 to 4, wherein the step of moving the rotor blade (18) downwards uses a descent unit and at least one hydraulic cylinder (28) which acts between the rotor blade (18) and the tower (12) and/or the temporary structural system (22).

6. Method of claim 5, **characterized in that** after an initial distance of the rotor blade (18) to the pitch bearing (20) is achieved some or all studs connecting the rotor blade (18) to the pitch bearing (20) are released.

7. Method of claim 6, wherein some of the studs fixing the rotor blade (18) to the pitch bearing (20) are replaced by longer studs to achieve the initial distance of the rotor blade (18) to the pitch bearing (20).

8. Method of claim 7, wherein some or all of the longer studs are equipped with a hydraulic descent cylinder which in its extended state descents the rotor blade (18).

9. Method of one of the claims 1 to 8, wherein the descent unit comprises at least one support frame (30) which is connected to the rotor blade (18) after some of the studs have been released and the initial distance has been achieved.

10. Method of claim 7, wherein a support bar for fixing the rotor blade temporary structural system is provided, the support bar comprises a support frame (30) having a connecting part (36a-d) for connection with the rotor blade (18) at its initial distance and an elongated support arm (34a-d) to be fixed to the temporary structural system (22).

11. Method of claim 8, wherein the support frame (30) is fixed to bores of the released studs in the blade root of the rotor blade (18).

12. Method of one of preceding claims, wherein after fixing the rotor blade (18) to the temporary structural system (22) the nacelle (rotor hub) is yawed to a new position in which the affected pitch bearing (20) can be freely descended without any interference with the temporary structural system (22).

13. Method of one of the preceding claims, wherein a blade support unit is mounted to the temporary structural system (22), the blade support unit supports the rotor blade (18) at a distance to the temporary structural system (22) and to the tower (12) of the wind turbine (10) such that the inclination of the rotor blade (18) remains the same for the rotor blade (18) mounted to the rotor hub and for the rotor blade (18) being fixed to the temporary structural system (22).
